# EUROPEAN PATENT SPECIFICATION

(11) **EP 2 816 324 B1**
(45) Date of publication and mention of the grant of the patent: **19.07.2017**
(21) Application number: 13749371.4
(22) Date of filing: 08.02.2013
(51) Int. Cl.: B60K 35/00, B60K 37/02, G01D 13/04, G01D 13/02

(54) **METER APPARATUS**
MESSVORRICHTUNG
COMPTEUR

(30) Priority: 16.02.2012 JP 2012031700
(43) Date of publication of application: 24.12.2014
(73) Proprietor: Honda Motor Co., Ltd., Minato-ku Tokyo 107-8556 (JP)
(72) Inventor: HAYASHI, Tomonori, Wako-shi, Saitama 351-0193 (JP); SUZUKI, Jun, Wako-shi, Saitama 351-0193 (JP); OGUCHI, Tsuyoshi, Wako-shi, Saitama 351-0193 (JP); NAMAI, Masashi, Wako-shi, Saitama 351-0193 (JP)
(74) Representative: Weickmann & Weickmann PartmbB
(86) International application number: PCT/JP2013/053127
(87) International publication number: WO 2013/122014

(56) References cited:
- GB-A- 2 079 497
- JP-A- H08 304 123
- JP-A- 2008 196 984
- JP-U- H0 265 194
- JP-U- H0 265 194
- JP-U- H0 471 120
- JP-U- H0 471 120
- JP-U- S6 196 314
- JP-U- H03 110 315
- JP-U- H03 110 315
- JP-U- S61 144 422
- JP-U- S63 155 097
- US-B1- 6 389 896

## Description

### Technical Field

The present invention relates to a meter apparatus, and in particular, relates to a meter apparatus mounted on a vehicle to convey information such as the vehicle speed, engine speed and the like to a crew.

### Background Art

A pointer meter apparatus in which a dial on which predetermined numbers and the like are printed is fixed inside a meter case and information such as the current vehicle speed is made recognizable by a pointer swinging over the dial has been known.

JP 2003-194589 A discloses a meter apparatus having a meter case in an upper and lower two-piece structure in which the dial is fixed inside the meter case by sandwiching the dial between both cases and connecting the both cases.

In JP H02-65194 U, on which the preamble of claim 1 is based, the plate spring portion is held between opposite projections formed on the upper case and the lower case, respectively.

In JP H03-110315 U a plate spring portion formed from the dial abuts on the flat surface or a projection on the upper case.

In JP H04-71120 U a circumference of the dial is provided with a bent portion fixed between opposite surfaces of the upper case and the lower case, respectively.

In GB 2079497 A the dial is provided with positioning projections fitted into corresponding holes formed in a lower casing of the meter apparatus.

In US 6,389,896 B1 the dial is provided with holes fitted on a projection formed on the lower case, and the upper case is provided with a recess to accommodate the projection.

### Summary of Invention

### Technical Problem

In a structure in which, like the meter apparatus described in JP 2003-194589 A, a dial is sandwiched between an upper case and a lower case and a fixed, if the thickness or the like of contact portions of the upper case and the lower case or the dial varies, the dial may rattle or the contact portions may become harder to come into contact and therefore, it is necessary to increase dimensional accuracy of each component. In addition, even if the dimensional accuracy of each component is increased, rattling or the like may occur under the influence of the temperature.

A purpose of the present invention is to provide a meter apparatus capable of fixing a dial sandwiched between an upper case and a lower case in a stable manner.

### Solution to Problem

To solve the afore-mentioned problem, the present invention provides a meter apparatus according to claim 1.

In a first feature, the meter apparatus (50) has a dial (120) held in a predetermined position by the dial (120) being sandwiched between an upper case (60) and a lower case (80). The upper case (60) and the lower case (80) are fixed to each other. The dial (120) is provided with a plate spring portion (124) and when the upper case (60) and the lower case (80) are fixed to each other. The dial (120) is configured to be held in the predetermined position in a state in which the plate spring portion (124) is pressed to a the upper case (60) side or a the lower case (80) side.

The present invention has a second feature in that the dial (120) is pressed to the upper case (60) side or the lower case (80) side by resiliency generated by the plate spring portion (124) being press-deformed by a press projection (73) provided in the upper case (60) or the lower case (80).

The present invention has a third feature in that the plate spring portion (124) is formed in a flat plate portion (121) provided on a circumference of the dial (120) and a bent portion (122) bent at a predetermined angle is provided between the flat plate portion (121) and a display portion (123) positioned inside the flat plate portion (121).

The present invention has a fourth feature in that the plate spring portion (124) is the upper case (60) is provided with a transmission portion (61 a) allowing visual recognition of at least a portion of the dial (120) from outside via a transmission lens (61) and the bent portion (122) is arranged outside an outer edge portion (61b) of the transmission portion (61a).

The present invention has a fifth feature in that the display portion (123) of the dial (120) is configured by a curved surface.

The present invention has a sixth feature in that a positioning hole (126) that positions the lower case (80) or the upper case (60) is provided in a position outside the bent portion (122) of the dial (120).

The present invention has a seventh feature in that the plate spring portion (124) is formed by providing two cuts (125) that are substantially parallel in the flat plate portion (121) of the dial (120).

The present invention has an eighth feature in that the plate spring portion (124) is disposed on straight lines (D, E) connecting a fixing portion (81) that fixes the upper case (60) and the lower case (80) to each other and a center of an indicator (132) rotationally moving over the display portion (123).

The present invention has a ninth feature in that a recess (90) as a clearance portion of the plate spring portion (124) is formed in the upper case (60) or the lower case (80) in a position opposite to the plate spring portion (124) of the dial (120).

### Advantageous Effects of Invention

According to the invention having a first feature, a dial is provided with a plate spring portion and when an upper case and a lower case are fixed to each other, the dial is configured to be held in the predetermined position in a state in which the plate spring portion is pressed to the upper case side or the lower case side, and therefore, the dial can be fixed in a stable manner.

In addition, even if dimensional variations of each component arise, variations in dimension are absorbed by deformation of the plate spring portion and therefore, the dial will not rattle under the influence of changes of the temperature so that a meter apparatus superior in productivity and salability can be obtained.

According to the invention having a second feature, the dial is pressed to the upper case side or the lower case side by resiliency generated by the plate spring portion being press-deformed by a press projection provided in the upper case or the lower case, and therefore, the dial can be pressed to one side by deforming the plate spring portion by the press projection.

According to the invention having a third feature, the plate spring portion is formed in a flat plate portion provided on a circumference of the dial and a bent portion bent at a predetermined angle is provided between the flat plate portion and a display portion positioned inside the flat plate portion, and therefore, even if the plate spring portion is significantly deformed, the deformation can be limited by the bent portion and the display portion on which predetermined numbers and the like are printed can be prevented from being affected by the deformation.

According to the invention having a fourth feature, the upper case is provided with a transmission portion allowing visual recognition of at least a portion of the dial from outside via a transmission lens and the bent portion is arranged outside an outer edge portion of the transmission portion, and therefore, the plate portion subject to deformation by being positioned outside the bent portion is prevented from being visually recognized from outside and the appearance of the meter apparatus can be enhanced.

According to the invention having a fifth feature, the display portion of the dial is configured by a curved surface, and therefore, the display portion can be made still more resistant to deformation of the plate spring portion by increasing rigidity of the display portion.

According to the invention having a sixth feature, a positioning hole that positions the lower case or the upper case is provided in a position outside the bent portion of the dial, and therefore, the positioning hole is prevented from being visually recognized from outside through the transmission portion and the appearance of the meter apparatus can be enhanced. If a load should be applied to the positioning hole when the dial is sandwiched, the possibility of the display portion being affected can be reduced.

According to the invention having a seventh feature, the plate spring portion is formed by providing two cuts that are substantially parallel in the flat plate portion of the dial, and therefore, the plate spring portion can be obtained as a simple configuration. Accordingly, for example, when the dial is formed by punch pressing, the plate spring portion can also be obtained at the same time and the number of man-hours for production can be reduced. Because the tip of the plate spring portion is shaped to be along an outer edge portion of the dial, the tip of the plate spring portion is not caught when the dial is transported or stored and the dial can be protected.

According to the invention having a eighth feature, the plate spring portion is disposed on straight lines connecting a fixing portion that fixes the upper case and the lower case to each other and a center of an indicator rotationally moving over the display portion, and therefore, the fixing portion to engage both cases and the plate spring portion of the dial are arranged close to each other so that the plate spring portion can reliably be pressed.

According to the invention having a ninth feature, a recess as a clearance portion of the plate spring portion is formed in the upper case or the lower case in a position opposite to the plate spring portion of the dial, and therefore, a bending margin when the plate spring portion is pressed is secured so that the dial can reliably be pressed to the upper case side or the lower case side.

### Brief Description of Drawings

FIG. 1 is a left side view of a motorcycle to which a meter apparatus according to an embodiment of the present invention is applied.
FIG. 2 is a partially enlarged perspective view showing the configuration around the wheel of the motorcycle.
FIG. 3 is a front view of the meter apparatus.
FIG. 4 is a left side view of the meter apparatus.
FIG. 5 is a right side view of the meter apparatus.
FIG. 6 is a rear view of the meter apparatus.
FIG. 7 is a perspective view of the upper case.
FIG. 8 is a perspective view when the upper case is viewed from reverse side.
FIG. 9 is a front view of the meter apparatus in a state in which the upper case is removed.
FIG. 10 is a perspective view of a dial.
FIG. 11 is a front view of the meter apparatus in a state in which the upper case 60 and the dial are removed.
FIG. 12 is a perspective view of the meter apparatus in a state in which the upper case and the dial are removed.
FIG. 13 is a perspective view of the liquid crystal panel constituting the liquid crystal display unit.
FIG. 14 is a perspective view of the supporting stand to support the liquid crystal panel.
FIG. 15 is a perspective view of the liquid crystal display unit.
FIG. 16 is sectional view along 16-16 line in FIG 3.
FIG. 17 is a sectional view along 17-17 line in FIG. 3
FIG. 18 is a sectional view along 18-18 line in FIG. 9.
FIG. 19 is a front view of a lower case and a board according to an embodiment of the present invention.

### Description of Embodiment

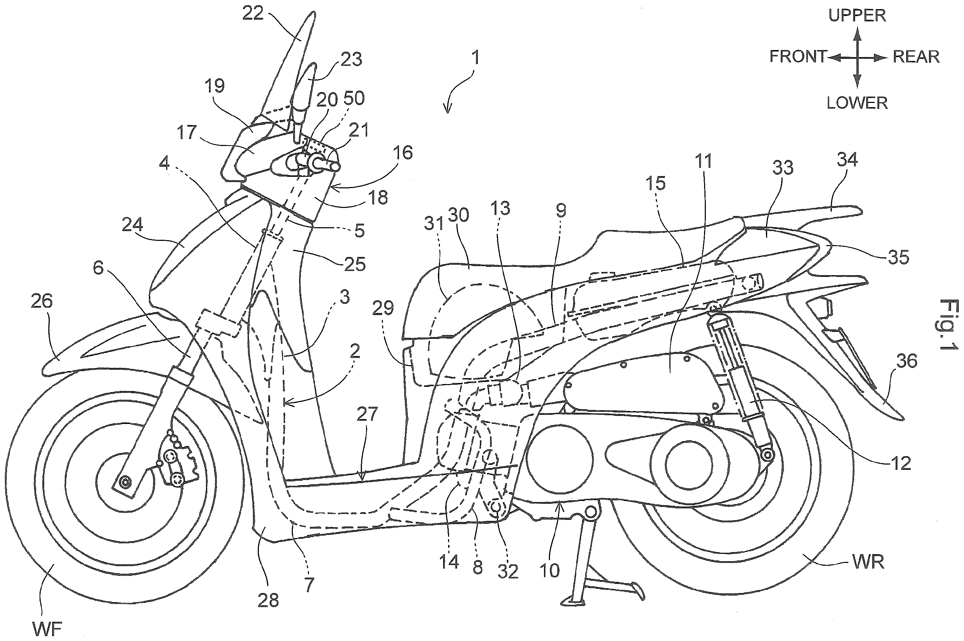

A preferred embodiment of the present invention will be described in detail below with reference to the drawings. FIG. 1 is a left side view of a motorcycle 1 to which a meter apparatus 50 according to an embodiment of the present invention is applied. The motorcycle 1 is a scooter-type saddle-riding vehicle having a low floor 27. A head pipe 4 freely rotatably and pivotally supporting a steering system 5 is fixed to a forward edge of a main frame 3 constituting a body frame 2. A steering wheel 20 is attached to an upper edge of the steering system 5 and a pair of left and right forward forks 6 is attached to a lower edge on one side. A front wheel WF is supported freely rotatably and pivotally by the lower edge of the forward forks 6 and a forward fender 26 as a mudguard is disposed above the front wheel WF.

The main frame 3 extending in an approximately downward direction of the body is curved in a rear direction of the body in a curved portion 7 to form the low floor 27 and then extends in an upward direction of the body to be connected to a pair of left and right rear frames 9. A pair of left and right pivot frames 8 is connected to the curved portion 7 covered with an under-cowl 28 in a rear portion of the body. A unit swing 10 in which an engine and an automatic continuously variable transmission are integrally formed is freely swingably and pivotally supported by a pivot shaft 32 of the pivot frames 8. A rear wheel WR as a drive wheel is freely rotatably and pivotally supported by the unit swing 10 and a rear edge of the unit swing 10 is hung by the rear frames 9 via a rear cushion 12. A fuel injector 13 that supplies a mixture to an intake port (not shown) of the engine and an air cleaner box 11 are disposed above the unit swing 10 an exhaust pipe 14 connected to an exhaust port (not shown) is relayed below on one side thereof.

The head pipe 4 of the body frame 2 is covered with a front cowl 24 on a body forward side and a floor cowl 25 arranged opposite to legs of the crew from the forward and backward direction of the body. A wheel grip 21 is attached to both edges of the steering wheel 20 and the center in a vehicle width direction of the steering wheel 20 is covered with a wheel cover 16 including an upper cover 17 and a lower cover 18. A head light 19, a wind screen 22, and a pair of left and right rear-view mirrors 23 are mounted on the wheel cover 16 and further, the meter apparatus 50 displaying information such as the vehicle speed is mounted in the rear direction of the wind screen 22.

A seat 30 freely opened and closed by a hinge mechanism is disposed above in a rear portion of the low floor 27. An accommodation box 29 capable of accommodating a helmet 31 or the like and a fuel tank 15 are disposed in a lower portion of the seat 30. A rear-cowl 33, a rear carrier 34, and a tail lamp device 35 are provided in the rear direction of the seat 30. A rear fender 36 containing a license light is mounted below the tail lamp device 35.

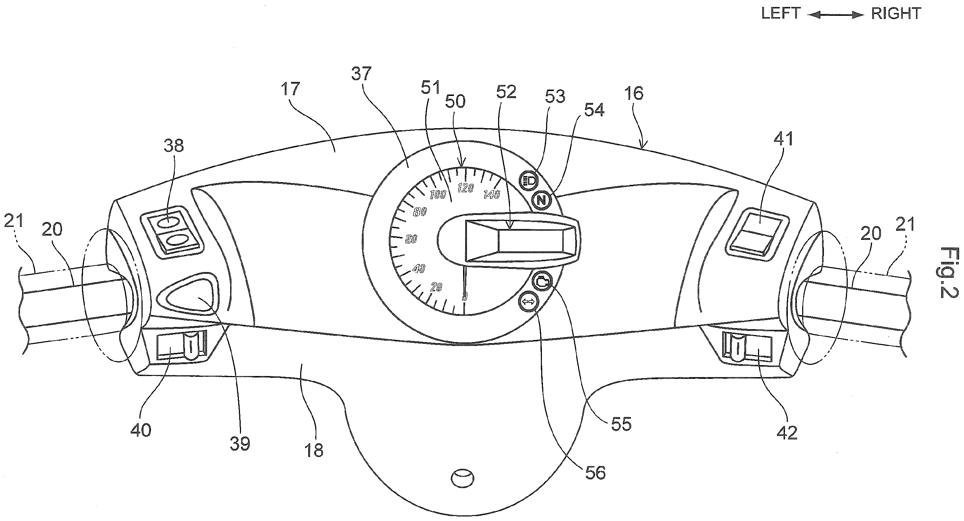

FIG. 2 is a partially enlarged perspective view showing the configuration around the wheel of the motorcycle 1. This figure corresponds to a state in which the driver sitting on the seat 30 looks down at around the wheel. The wheel cover 16 includes, as described above, the upper cover 17 and the lower cover 18 and the meter apparatus 50 is buried in the center in the vehicle width direction of the upper cover 17. A decorative cover 37 is put on the meter apparatus 50 and large and small windows provided in the decorative cover 37 are configured such that a speedometer 51, a liquid crystal display unit 52 displaying a distance recorder or the like, and various warning lamps 53, 54, 55, 56 can visually be recognized through such windows.

An optical axis adjustment switch 38 of a head lamp, a horn switch 39, and a winker switch 40 are disposed on the left side in the vehicle width direction of the wheel cover 16 and on the other hand, an engine stop switch 41 and a starter switch 42 are disposed on the right side.

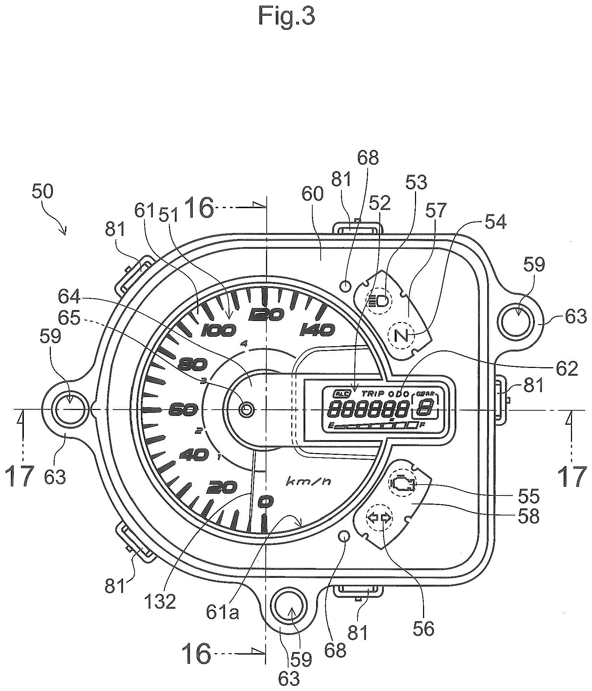

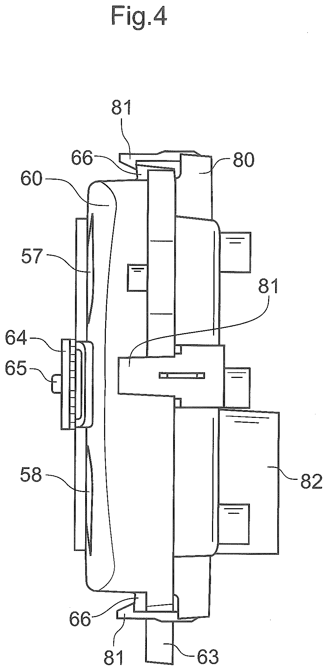

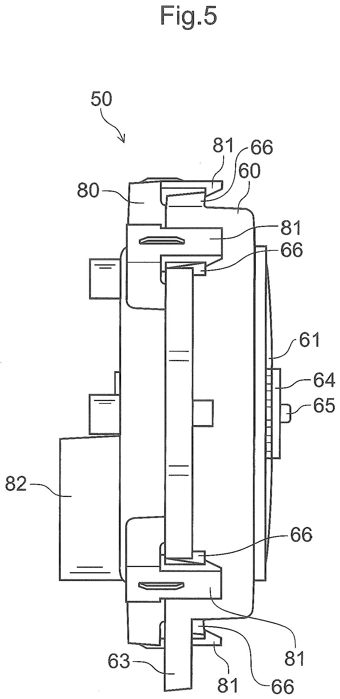

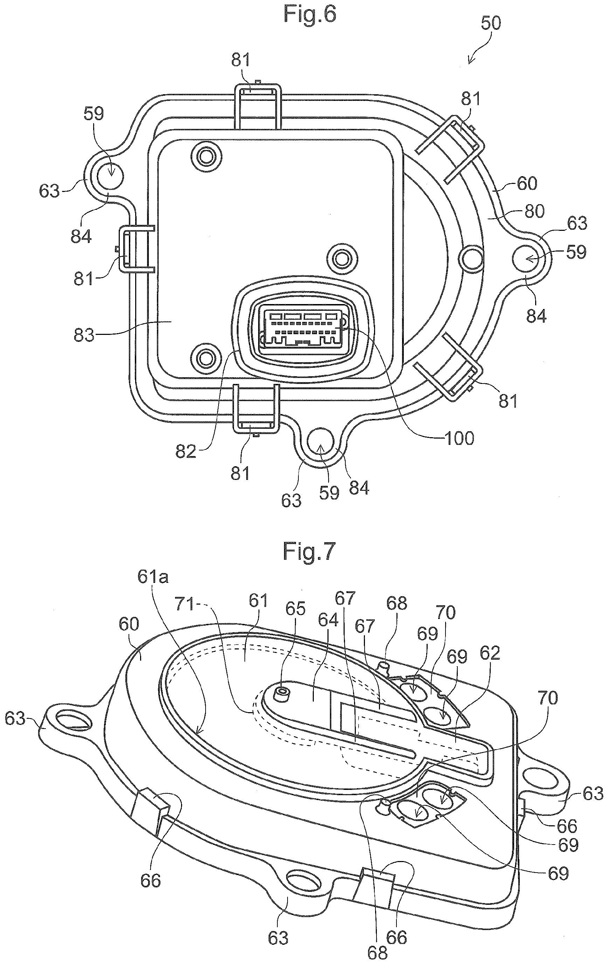

FIG. 3 is a front view of the meter apparatus 50. FIG. 4 is a left side view thereof, FIG. 5 is a right side view thereof, and FIG. 6 is a rear view thereof. The meter apparatus 50 accommodates a meter board, a dial and the like between an upper case 60 positioned on an upper side of the body and a lower case 80 positioned on a lower side of the body and is configured by mutually fixing the upper case 60 and the lower case 80 by means of an engaging structure that eliminates the need for fastening components such as screws.

The speedometer 51 is visually recognized from a main transmission portion 61a in a substantially circular shape formed by a clear and transparent lens 61. The liquid crystal display unit 52 is visually recognized from a sub-transmission portion 62 in a substantially rectangular shape formed by the lens 61. The lens 61 made of resin is a single component from the main transmission portion 61a to the sub-transmission portion 62 and is insert-molded in the upper case 60 made of rigid synthetic resin or the like.

A head lamp upward indicating lamp 53, a neutral lamp 54, an engine warning lamp 55, and a winker operation lamp 56 are provided on an outer circumference of the main transmission portion 61a. The four warning lamps 53 to 56 have display figures formed by colored and transparent printing in green, yellow or the like and also resin plates 57, 58 provided by printing the circumference thereof in black and are configured so that only display figures emit colored light by irradiating the reverse side of the resin plates 57, 58 with irradiation light of a white LED.

A rotation shaft portion of an indicator 132 of the speedometer 51 is covered with a cover member 64. A projection 65 vertically arranged from the cover member 64 is used, like two projections 68 vertically arranged near the resin plates 57, 58, to position the decorative cover 37 (see FIG. 2).

An upper flange 63 in three locations provided in the upper case 60 is formed of a thin plate and the upper flange 63 is structured to be put on a lower flange 84 (see FIG. 6) formed in the lower case 80 from an upper side of the body. The meter apparatus 50 is fixed to the wheel cover 16 (see FIG. 2) by a fastening bolt (not shown) inserted through a through hole 59 of the upper flange 63 and the lower flange 84.

Five engaging claws 81 to engage and fix the upper case 60 are provided in a circumferential portion of the lower case 80. The engaging claw 81 is a thin plate having a hook shape at the tip thereof and is formed integrally with the lower case 80. An engaging projection 66 engaging with the engaging claw 81 is provided in five locations in a circumferential portion of the upper case 60. When the upper case 6o and the lower case 80 are brought closer to each other, the engaging claw 81 in contact with an inclined plane of the engaging projection 66 is elastically deformed by gradually being pushed and widened to the outer side and when pushed to a predetermined position, a hook portion of the engaging claw 81 is caught by a horizontal plane of the engaging projection 66 while the engaging claw 81 returns to its original shape.

A connector 100 to connect a harness (not shown) to the undersurface of the meter apparatus 50 projects from the lower case 80 and also a guard member 82 vertically arranged around the connector 100 is provided.

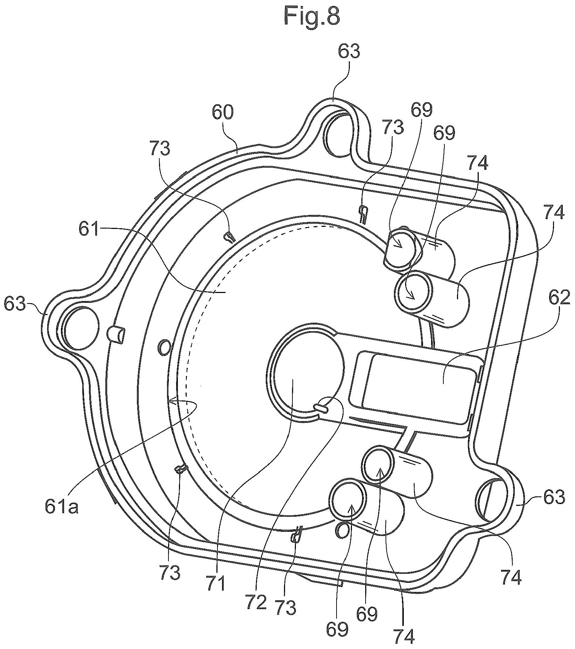

FIG. 7 is a perspective view of the upper case 60. FIG. 8 is a perspective view when the upper case 60 is viewed from the reverse side. An extended portion 67 constituting a portion of the outer shape of the sub-transmission portion 62 is provided in the cover member 64. The resin plates 57, 58 (see FIG. 3) constituting the warning lamps 53 to 56 are engaged and fixed to a step portion 70 having a depth corresponding to the thickness of the resin plates 57, 58. A through hole 69 to guide irradiation light of a white LED is formed at the bottom of the step portion 70.

Four cylindrical members 74 constituting the through hole 69 is provided on the reverse side of the upper case 60. The cover member 64 is connected to a reverse-side cover portion 71 formed integrally with the upper case 60 like sandwiching the lens 61. In the reverse-side cover portion 71, a pin 72 as a stopper to stop the indicator of the speedometer 51 to the zero position is integrally provided.

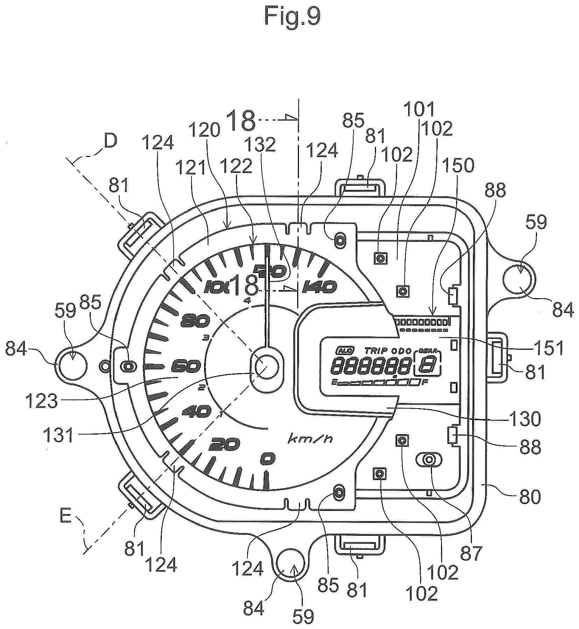

Four press projections 73 are provided around the main transmission portion 61a. The press projections 73 are provided to cause elastic deformation of a dial 120 described later by pressing against a plate spring portion (see FIG. 9) when the upper case 60 and the lower case 80 are engaged.

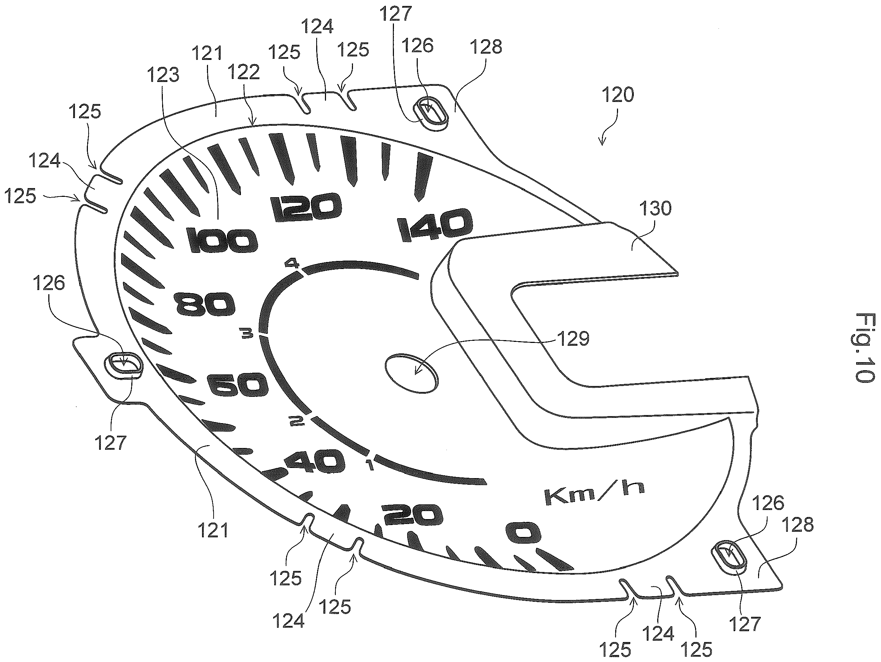

FIG. 9 is a front view of the meter apparatus 50 in a state in which the upper case 60 is removed. FIG. 10 is a perspective view of the dial 120. When assembling the meter apparatus 50, a board 101 as an electronic board is first mounted on the bottom of the lower case 80 and next, the dial 120 is arranged above the board 101 and lastly, the upper case 60 is put from the upper side of the body of the lower case 80 and the both cases 60, 80 are engaged and fixed by pressing against each other to complete the assembly.

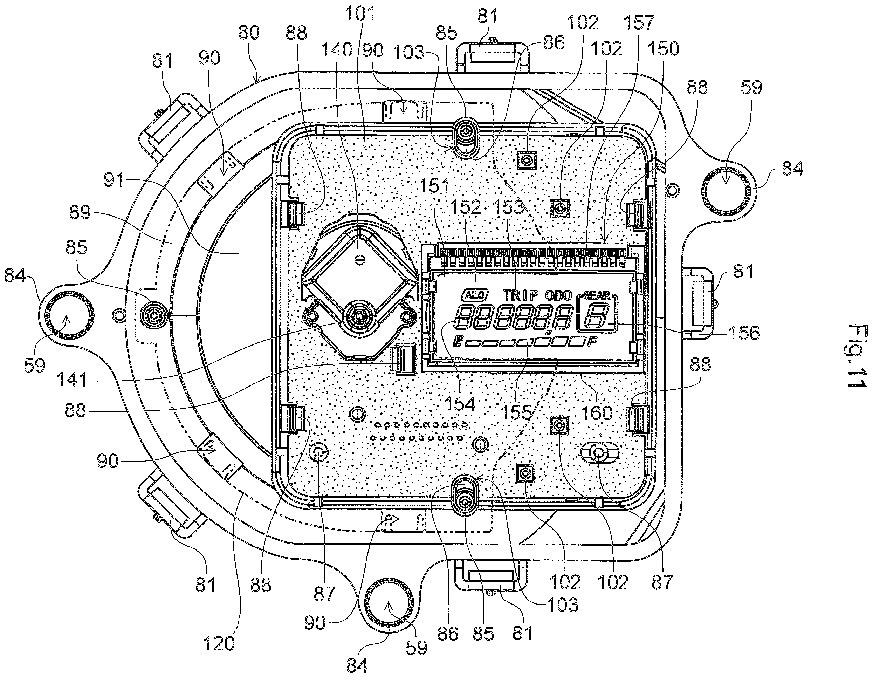

A liquid crystal display unit 150 and four white LEDs 102 are mounted on the board 101 in a substantially square shape. The board 101 is positioned by a positioning projection 87 or the like formed in the lower case 80 and engaged and fixed by a total of five engaging claws 88 (see FIG. 11).

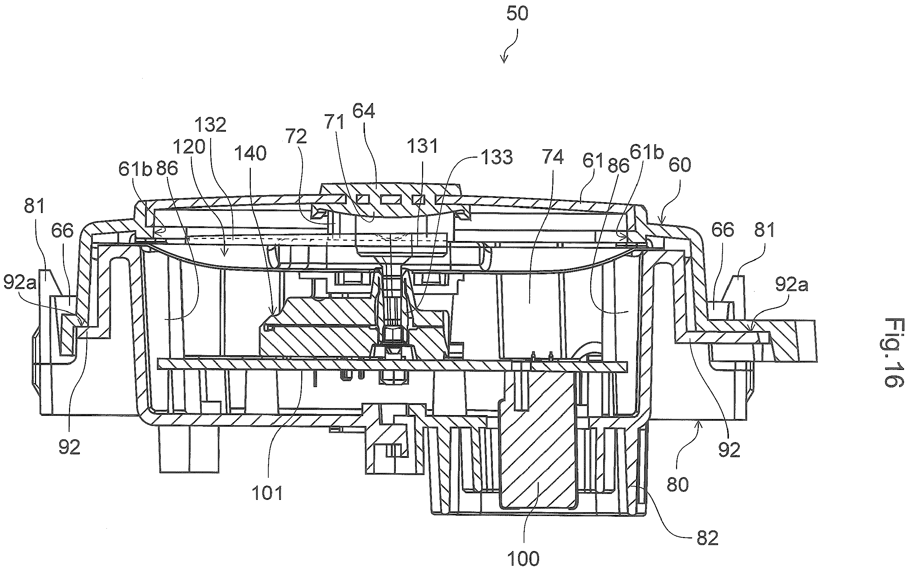

The dial 120 is formed by press molding or the like of a thin plate made of metal and has a display portion 123 that has a substantially circular shape and is curved in a front view. A window frame 130 to visually recognize a liquid crystal panel 151 of the liquid crystal display unit 150 is formed on the right side in the vehicle width direction of the display portion 123. An opening 129 to allow a rotating shaft 133 (see FIG. 16) of the indicator 132 is provided in a substantial center of the display portion 123. The paint color and numbers of the display portion 123 are marked by printing and the indicator 132 indicates a predetermined speed by a base 131 being rotationally moved. In the present embodiment, black characters are printed on a white background.

A flat plate portion 121 is formed on the circumference of the display portion 123 and a plate spring portion 124 is provided in a total of five locations of the edge of the flat plate portion 121. The plate spring portion 124 is formed by providing two substantially parallel cuts 125 having a predetermined interval in the flat plate portion 121. According to this structure, when the dial 120 made of a thin plate of metal is molded by punch pressing or the like, the plate spring portion 124 can also be formed at the same time. Because the tip of the plate spring portion 124 is shaped to be along an outer edge of the dial 120, the tip of the plate spring portion 124 does not protrude from the outer edge so that the tip of the plate spring portion 124 can be protected when the dial 120 is transported or stored.

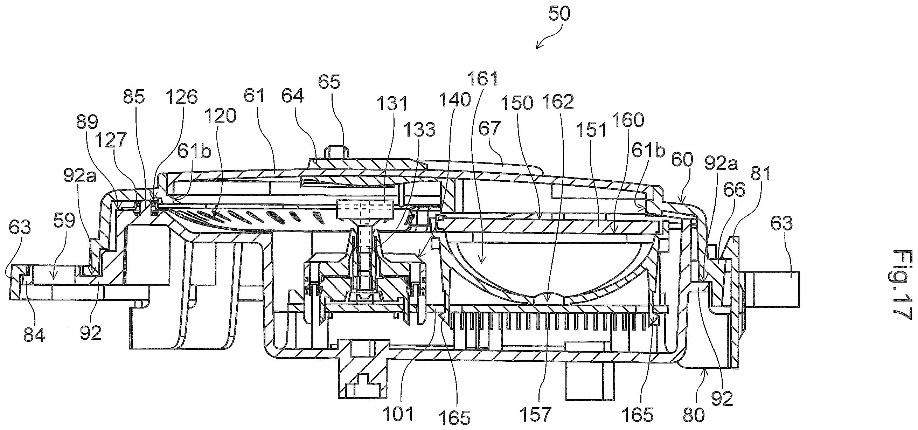

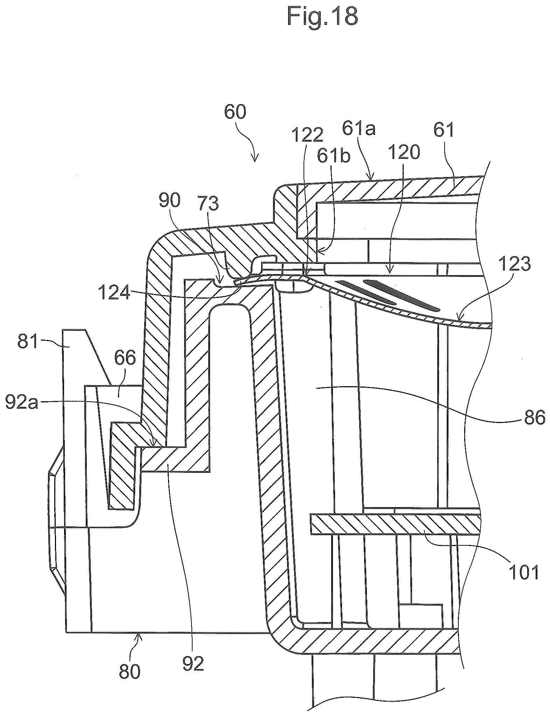

A bent portion 122 bent at a predetermined angle is formed between the flat plate portion 121 in a flat plate shape and the display portion 123 having a curved surface. Accordingly, even if the plate spring portion 124 is significantly deformed, the deformation can be limited by the bent portion 122 and the display portion 123 can be prevented from being affected by the deformation. In addition, the bent portion 122 is arranged outside an outer edge portion 61b (see FIGS. 17 and 18) of the main transmission portion 61 a and therefore, the bent portion 122 is prevented from visually being recognized from outside and the appearance of the meter apparatus 50 is not marred.

Overhang portions 128, which are formed vertically symmetrically in positions closer to the window frame 130 of the flat plate portion 121. The overhang portion 128 has a positioning hole 126 of a positioning projection 85 formed therein. Of a total of the three positioning holes 126 having a long hole shape by being surrounded by a rib 127 vertically arranged, while the longer direction of the two positioning holes 126 in the overhang portion 128 is oriented in the up and down direction, the longer direction of the positioning hole 126 on the left side in the vehicle width direction is oriented in the vehicle width direction. By adopting such a long hole structure, even if dimensional variations of the dial 120 arise, it is still possible to position the dial 120 in a predetermined position by allowing for such variations.

While the positioning projections in three locations should be disposed by being spaced as wide as possible to increase the positioning accuracy of the dial 120, the present embodiment is configured to increase the positioning accuracy of the dial 120 by forming the positioning holes 126 after the overhang portion 128 is provided to lengthen the interval of the three positioning holes 126 as much as possible within the range in which the dial 120 as a whole is not too large while preventing the meter apparatus 50 from becoming too large.

Two of the five plate spring portions 124 positioned on the left side in the front view are provided on straight lines D, E connecting the rotation shaft of the base 131 of the indicator 132 and the center of the engaging claws 81 respectively. Accordingly, the engaging claw 81 and the engaging projection 66 are engaged in a position close to the plate spring portion 124 and therefore, pressing of the plate spring portion 124 by the press projection 73 can be performed more reliably. The present embodiment is designed such that the straight lines D, E form a right angle.

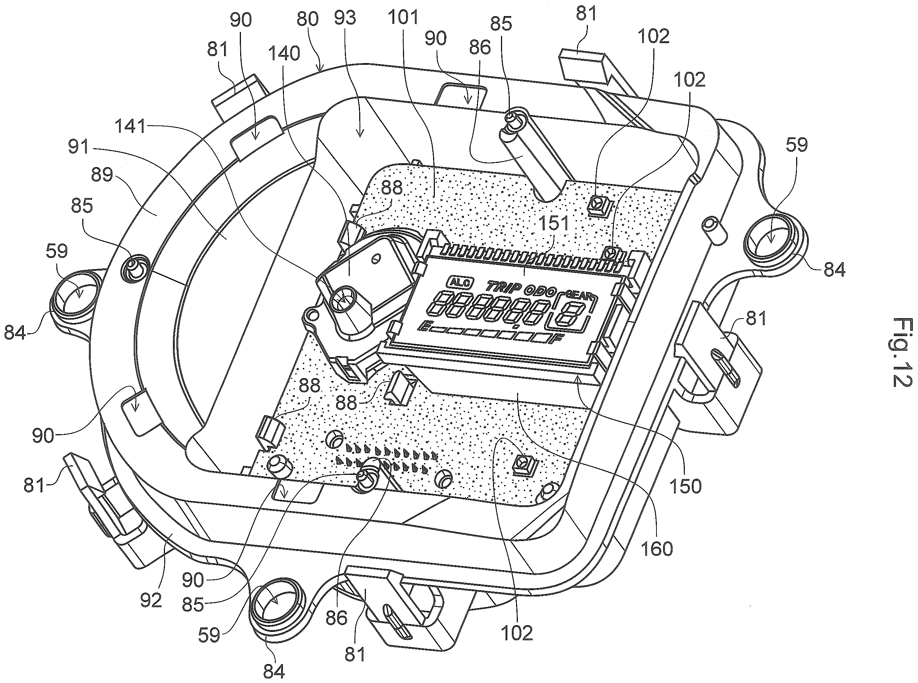

FIG. 11 is a front view of the meter apparatus 50 in a state in which the upper case 60 and the dial 120 are removed. FIG. 12 is a perspective view thereof. In both figures, the board 101 is hatched so that components can easily be recognized. Also in FIG. 11, the position of the dial 120 is indicated by a chain double-dashed line. The lower flange 84 having the through hole 59 is formed in a portion of the lower case 80 where a portion of an edge 92 thereof is overhung.

In the board 101 as a printed circuit board, a stepping motor 140 to drive the indicator 132 attached to a rotating shaft hole 141, the liquid crystal display unit 150, and the four LEDs 102 as light emission sources of warning lights are implemented.

The liquid crystal display unit 150 includes a supporting stand 160 mounted on the board 101 and the liquid crystal panel 151 supported by the supporting stand 160. In the liquid crystal panel 151, an alcohol concentration display 152 in the fuel, an odo/trip switching display 153, an odo/trip meter 154 including seven segment displays, a fuel gauge 155, and a gear position display 156 are displayed.

The board 101 is accommodated, as described above, at the bottom of an accommodation portion 93 in a substantially square shape formed in the lower case 80. The board 101 is positioned by the two positioning projections 87 formed in the lower case 80 and two column members 86 formed integrally on an inner wall of the accommodation portion 93 and having a substantially elliptic section. Only one of two engaging holes engaged with the positioning projections 87 has a long hole shape. The column members 86 engage with engaging grooves 103 formed opposite to two opposite sides of the board 101. A small gap is provided between the column member 86 and the engaging groove 103. The positioning projection 85 that positions the dial 120 is formed in an upper portion of the column member 86 and the reverse side of the dial 120 comes into contact a smooth surface 89 where the positioning projection 85 is not present. More specifically, the dial 120 is sandwiched between the lower case and the upper case 60 by the reverse side of the flat plate portion 121 being supported by the smooth surface 89 of the lower case 80 and on the other hand, the plate spring portion 124 being pressed by the upper case 60.

The board 101 is engaged and fixed to the lower case 80 by using the four engaging claws 88 positioned in the outer edge portion thereof and the one engaging claw 88 positioned between the stepping motor 140 and the liquid crystal display unit 150. The disposition position of the liquid crystal display unit 150 implemented in the board 101 is set to the outside of the rotation range of the indicator 132 of the speedometer 51 and is thereby brought to the stepping motor 140 as close as possible to reduce the size of the board 101 as a whole.

A recess 90 as a clearance portion of the plate spring portion 124 elastically deformed after being pressed by the press projection 73 of the upper case 60 is formed in a position corresponding to the plate spring portion 124 in the lower case 80. With a bending margin during deformation being secured by the recess 90, the dial 120 can effectively be pressed to the lower case 80 side by significantly deforming the plate spring portion 124.

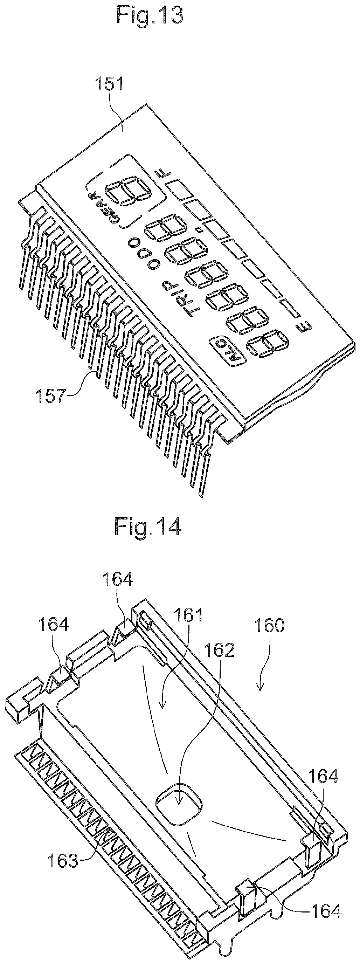

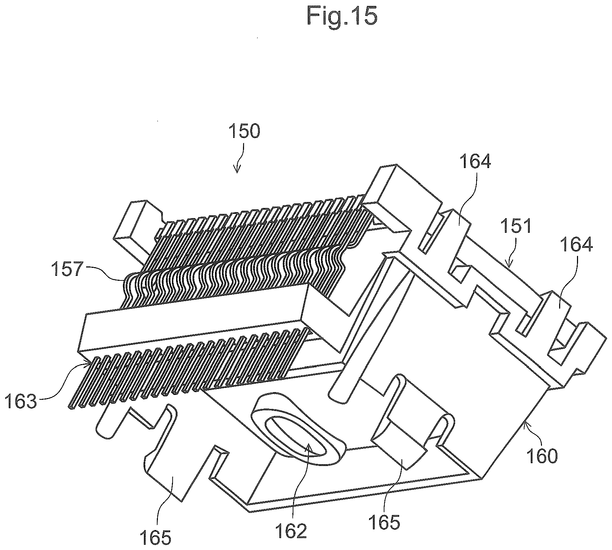

FIG. 13 is a perspective view of the liquid crystal panel 151 constituting the liquid crystal display unit 150. FIG. 14 is a perspective view of the supporting stand 160 to support the liquid crystal panel 151 and FIG. 15 is a perspective view of the liquid crystal display unit 150.

The liquid crystal panel 151 is provided with a plurality (for example, 22) of terminals 157 extending in a direction perpendicular to the display surface thereof and connected to the board 101. The supporting stand 160 made of resin or the like is provided with a cup-shaped portion 161 covering the reverse side of the liquid crystal panel 151 and a daylighting aperture 162 to introduce irradiation light of an LED backlight (not shown) implemented in the board 101 is formed at the bottom of the cup-shaped portion 161. The supporting stand 160 is also provided with four support claws 164 to support the liquid crystal panel 151 and two fixing claws 165 to mount the supporting stand 160 on the board 101. Further, a plurality of through holes 163 to allow the terminals 157 to pass through one after another is formed on the side of the supporting stand 160.

By adopting the above configuration, when the liquid crystal panel 151 is mounted in a predetermined position of the supporting stand 160, the terminals 157 are held in a stable manner by passing through the through holes 163 so that the supporting stand 160 can easily be mounted on the board 101.

FIG. 16 is a sectional view along 16-16 line in FIG. 3. The lens 61 insert-molded in the upper case 60 has an upwardly convex curved shape with an apex in a portion corresponding to the rotating shaft 133 of the indicator 132. When the upper case 60 and the lower case 80 are engaged, the distance between the upper case 60 and the lower case 80 is defined by a contact surface 92a formed by a horizontal surface formed in the outer edge portion of the upper case 60 being brought into contact with a surface of the edge 92 of the lower case 80 on the body upward side. Accordingly, together with engagement of the engaging claw 81 of the lower case 80 with the engaging projection 66 of the upper case 60, the distance between both cases is correctly defined. In other words, in the meter apparatus 50 according to the present embodiment, both cases are fixed in a stable manner and also the dial 120 is sandwiched with stability by the upper case 60 and the lower case 80 being brought into contact by the contact surface 92a.

The cylindrical members 74 guiding irradiation light of the LED 102 to the four warning lamps 53 to 56 extend to the side of the lower case 80 up to a position close to the board 101. The guard member 82 vertically arranged by surrounding the connector 100 mounted on the reverse side of the board 101 is provided by extending up to a position below the lower end of the connector 100. Also, by arranging, as described above, the bent portion 122 outside the outer edge portion 61b of the main transmission portion 61a, the flat plate portion 121 subject to deformation by being positioned outside the bent portion 122 is prevented from being visually recognized from outside and the appearance of the meter apparatus 50 is enhanced.

FIG. 17 is a sectional view along 17-17 line in FIG. 3. The lower case 80 is configured in a box shape only in a portion where the board 101 is accommodated to realize size and weight reduction of the meter apparatus 50. The cup-shaped portion 161 formed in the supporting stand 160 of the liquid crystal display unit 150 has the daylighting aperture 162 extending to the lower case 80 side up to a position close to the board 101 to collect irradiation light of a light source implemented in the board 101. The terminals 157 are set such that when the supporting stand 160 is mounted on the board 101, the tip thereof protrudes from the reverse side by passing through the board 101.

The positioning projection 85 of the dial 120 formed in the lower case 80 extends up to a position almost in contact with the upper case 60 by passing through the positioning hole 126 of the dial 120. Also, the rib 127 mounted upright around the positioning hole 126 extends up to a position almost in contact with the upper case 60.

FIG. 18 is a sectional view along 18-18 line in FIG. 9. When the upper case 60 and the lower case 80 are engaged, the plate spring portion 124 formed in the dial 120 is elastically deformed by being pressed downward in FIG. 18 by the press projection 73 formed in the upper case 60. At this point, the recess 90 formed in the lower case 80 serves as a clearance margin of the elastically deformed plate spring portion 124. With this configuration, the dial 120 is pressed to the lower case 80 side by resiliency based on elastic deformation of the plate spring portion 124 and can be supported in a stable manner without rattling or the like being caused.

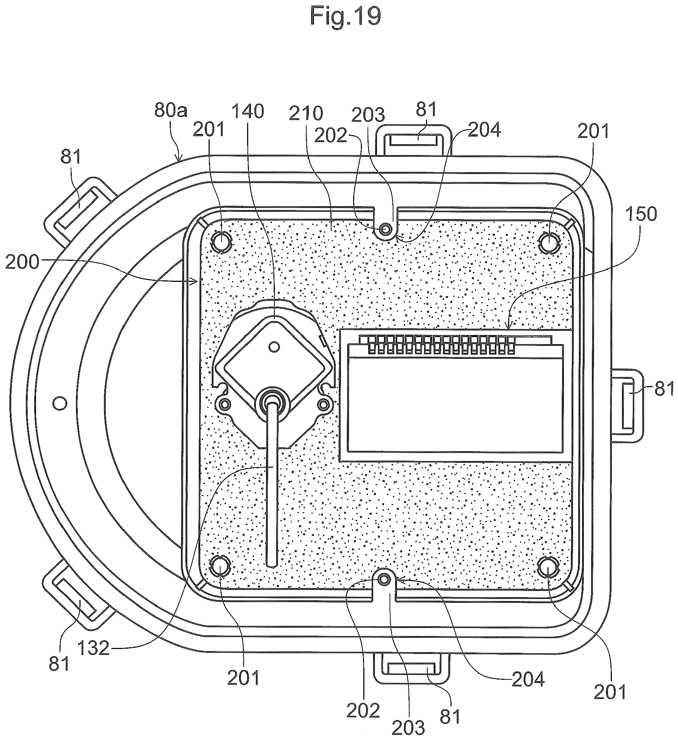

FIG. 19 is a front view of a lower case 80a and a board 210 according to an embodiment of the present invention. The same reference signs indicate the same portions or equivalent portions as before. The present modification is slightly different in a positioning structure of the board 210 with respect to the lower case 80a.

The board in which the stepping motor 140 and the liquid crystal display unit 150 are implemented is accommodated at the bottom of an accommodation portion 200 in a substantially square shape formed in the lower case 80a. The board 210 is positioned by four positioning projections 201 formed in the lower case 80a and two column members 203 formed integrally on an inner wall of the accommodation portion 200 and having a substantially elliptic section. A positioning projection 202 of the dial 120 is provided on the top surface of the column members 203.

The column members 203 engage with engaging grooves 204 formed in positions opposite to two opposite sides of the board 200. A gap as shown in the above embodiment is not provided between the column member 203 and the engaging groove 204 and engagement/fixing of the board 210 to the lower case 80a is configured to be completed by the positioning projections 201 and the column members 203 being fitted when the board 210 is accommodated in a predetermined position at the bottom of the accommodation portion 200.

According to a meter apparatus in the present embodiment, as described above, the dial 120 is provided with the plate spring portion 124 and when the upper case 60 and the lower case 80 are mutually engaged and fixed, resiliency is generated by elastic deformation of the plate spring portion 124 to the lower case 80 side by the press projection 73 provided in the upper case 60 and the dial 120 is held in a predetermined position while the plate spring portion 124 pressed to the lower case 80 side by the resiliency and therefore, the dial can be engaged and fixed in a stable manner while fastening components such as screws being reduced by fixing the upper case and the lower case by using the engaging structure. In addition, even if dimensional variations of each component arise, variations in dimension are absorbed by deformation of the plate spring portion and therefore, the dial will not rattle and engagement of engaging portions will not become harder to carry out under the influence of changes of the temperature or humidity so that a meter apparatus superior in productivity and salability can be obtained.

The materials and shapes of the upper case, lower case, and dial and the shape and molding method of the plate spring portion are not limited to those in the above embodiment and various modifications can be made. For example, the press projection to press against the plate spring portion may be provided on the lower case side. In addition, the above embodiment is described by taking an example in which the upper case and the lower case are mutually engaged and fixed, but the lower case may be fixed to the upper case or the upper case may be fixed to the lower case by using screws or the like. A meter apparatus according to the present invention is not limited to motorcycles and can be applied to various vehicles such as saddle-riding tricycles/four-wheel vehicles.

### Reference Signs List

- 1: motorcycle,
- 50: meter apparatus,
- 51: speedometer,
- 60: upper case,
- 61: transmission lens,
- 61a: main transmission portion (transmission portion),
- 61b: outer edge portion,
- 73: press projection,
- 80: lower case,
- 81: fixing portion,
- 85: positioning projection,
- 101: board,
- 120: dial,
- 121: flat plate portion,
- 122: bent portion ,
- 123: display portion,
- 124: plate spring portion,
- 125: cut,
- 126: positioning hole,
- 132: center of an indicator,
- 150: liquid crystal display unit

## Claims

1. A meter apparatus (50) in which a dial (120) is held in a predetermined position by being sandwiched between an upper case (60) and a lower case (80) fixed to each other, wherein;
the dial (120) is provided with a plate spring portion (124) formed by providing two parallel cuts (125) that are substantially parallel in a flat plate portion (121) provided on a circumference of the dial (120) so that the tip end of the plate spring portion (124) does not project from an outer edge of the flat plate portion (121) of the dial (120), and
a bent portion (122) bent at a predetermined angle is provided between the flat plate portion (121) and a display portion (123) positioned inside the flat plate portion (121); and
when the upper case (60) and the lower case (80) are fixed to each other, the dial (120) is configured to be held in the predetermined position in a state in which the plate spring portion (124) is pressed to the upper case (60) side or the lower case (80) side;
**characterized in that**
when the upper case (60) and the lower case (80) are fixed to each other, the plate spring portion (124) is pressed into a recess (90) as a clearance portion of the plate spring portion (124) formed in the upper case (60) or the lower case (80) in a position opposite to the plate spring portion (124) of the dial (120).

2. The meter apparatus according to claim 1, wherein the dial (120) is pressed to the upper case (60) side or the lower case (80) side by resiliency generated by the plate spring portion (124) being press-deformed by a press projection (73) provided in the upper case (60) or the lower case (80).

3. The meter apparatus according to claim 1, wherein the upper case (60) is provided with a transmission portion (61a) allowing visual recognition of at least a portion of the dial (120) from outside via a transmission lens (61) and
the bent portion (122) is arranged outside an outer edge portion (61b) of the transmission portion (61 a).

4. The meter apparatus according to claim 1, 2 or 3, wherein the display portion (123) of the dial (120) is configured by a curved surface.

5. The meter apparatus according to claim 1 or 2, wherein a positioning hole (126) that positions the lower case (80) or the upper case (60) is provided in a position outside the bent portion (122) of the dial (120).

6. The meter apparatus according to claim 1 or 2, wherein the plate spring portion (124) is disposed on straight lines (D, E) connecting a fixing portion (81) that fixes the upper case (60) and the lower case (80) to each other and a center of an indicator (132) rotationally moving over the display portion (123).

## Patentansprüche

1. Messvorrichtung (50), in der ein Zifferblatt (120) durch Schichtung zwischen einem oberen Gehäuse (60) und einem unteren Gehäuse (80), die aneinander befestigt sind, in einer vorbestimmten Position gehalten wird, wobei:
das Zifferblatt (120) mit einem Blattfederabschnitt (124) versehen ist, der durch das Vorsehen von zwei parallelen Einschnitten (125), die im Wesentlichen parallel sind, in einem flachen Plattenabschnitt (121) gebildet ist, der an einem Umfang des Zifferblatts (120) vorgesehen ist, so dass das Außenende des Blattfederabschnitts (124) von einem Außenrand des flachen Plattenabschnitts (121) des Zifferblatts (120) nicht vorsteht, und
ein gebogenerAbschnitt (122), der mit einem vorbestimmten Winkel gebogen ist, zwischen dem flachen Plattenabschnitt (121) und einem Anzeigeabschnitt (123), der innerhalb des flachen Plattenabschnitts (121) angeordnet ist, vorgesehen ist; und
wenn das obere Gehäuse (60) und das untere Gehäuse (80) aneinander befestigt werden, das Zifferblatt (120) so konfiguriert ist, dass es in der vorbestimmten Position in einem Zustand gehalten wird, in dem der Blattfederabschnitt (124) zu der oberen Gehäuse-(60)-Seite oder der unteren Gehäuse-(80)-Seite gedrückt wird;
**dadurch gekennzeichnet, dass**
wenn das obere Gehäuse (60) und das untere Gehäuse (80) aneinander befestigt werden, der Blattfederabschnitt (124) als freier Abschnitt des Blattfederabschnitts (124) in eine Vertiefung (90) gedrückt wird, die in dem oberen Gehäuse (60) oder dem unteren Gehäuse (80) an einer Position ausgebildet ist, die dem Blattfederabschnitt (124) des Zifferblatts (120) gegenüberliegt.

2. Die Messvorrichtung nach Anspruch 1, wobei das Zifferblatt (120) zur oberen Gehäuse-(60)-Seite oder zur unteren Gehäuse-(80)-Seite durch Elastizität gedrückt wird, die erzeugt wird, indem der Blattfederabschnitt (124) durch einen im oberen Gehäuse (60) oder unteren Gehäuse (80) vorgesehenen Pressvorsprung (73) press-verformt wird.

3. Die Messvorrichtung nach Anspruch 1, wobei das obere Gehäuse (60) mit einem durchsichtigen Abschnitt (61 a) versehen ist, der durch eine durchsichtige Linse (61) eine visuelle Erkennung von zumindest einem Abschnitt des Zifferblatts (120) von außen erlaubt, und
der gebogene Abschnitt (122) außerhalb eines Außenrandabschnitts (61 b) des durchsichtigen Abschnitts (61 a) angeordnet ist.

4. Die Messvorrichtung nach Anspruch 1, 2 oder 3, wobei der Anzeigeabschnitt (123) des Zifferblatts (120) durch eine gekrümmte Oberfläche konfiguriert ist.

5. Die Messvorrichtung nach Anspruch 1 oder 2, wobei ein Positionierungsloch (126), das das untere Gehäuse (80) oder das obere Gehäuse (60) positioniert, in einer Position außerhalb des gebogenen Abschnitts (122) des Zifferblatts (120) vorgesehen ist.

6. Die Messvorrichtung nach Anspruch 1 oder 2, wobei der Blattfederabschnitt (124) auf geraden Linien (D, E) angeordnet ist, die einen Befestigungsabschnitt (81), der das obere Gehäuse (60) und das untere Gehäuse (80) aneinander fixiert, und eine Mitte eines Zeigers (132), der sich drehend über den Anzeigeabschnitt (123) bewegt, verbinden.

## Revendications

1. Appareil compteur (50) dans lequel un cadran (120) est maintenu dans une position prédéterminée en étant enserrée entre un boîtier supérieur (60) et un boîtier inférieur (80) fixés l'un à l'autre, dans lequel :
le cadran (120) est pourvu d'une portion de ressort à lame (124) formée en fournissant deux découpes parallèles (125) qui sont sensiblement parallèles dans une portion de lame plate (121) prévue sur une circonférence du cadran (120) de sorte que l'extrémité de bout de la portion de ressort à lame (124) ne fasse pas saillie depuis un bord extérieur de la portion de lame plate (121) du cadran (120), et
une portion coudée (122) coudée à un angle prédéterminé est prévue entre la portion de lame plate (121) et une portion d'affichage (123) positionnée à l'intérieur de la portion de lame plate (121) ; et
lorsque le boîtier supérieur (60) et le boîtier inférieur (80) sont fixés l'un à l'autre, le cadran (120) est configuré pour être maintenu dans la position prédéterminée dans un état dans lequel la portion de ressort à lame (124) est appuyée sur le côté de boîtier supérieur (60) ou le côté de boîtier inférieur (80) ;
**caractérisé en ce que**
lorsque le boîtier supérieur (60) et le boîtier inférieur (80) sont fixés l'un à l'autre, la portion de ressort à lame (124) est appuyée dans un évidement (90) en tant que portion de débattement de la portion de ressort à lame (124) formée dans le boîtier supérieur (60) ou le boîtier inférieur (80) dans une position opposée à la portion de ressort à lame (124) du cadran (120).

2. Appareil compteur selon la revendication 1, dans lequel le cadran (120) est appuyé sur le côté de boîtier supérieur (60) ou le côté de boîtier inférieur (80) par une résilience générée par la portion de ressort à lame (124) qui est déformée par appui par une saillie d'appui (73) prévue dans le boîtier supérieur (60) ou le boîtier inférieur (80).

3. Appareil compteur selon la revendication 1, dans lequel le boîtier supérieur (60) est pourvu d'une portion de transmission (61a) permettant une reconnaissance visuelle d'au moins une portion du cadran (120) depuis l'extérieur via une lentille de transmission (61) et
la portion coudée (122) est agencée hors d'une portion de bord extérieur (61b) de la portion de transmission (61a).

4. Appareil compteur selon la revendication 1, 2 ou 3, dans lequel la portion d'affichage (123) du cadran (120) est configurée par une surface incurvée.

5. Appareil compteur selon la revendication 1 ou 2, dans lequel un trou de positionnement (126) qui positionne le boîtier inférieur (80) ou le boîtier supérieur (60) est prévu dans une position hors de la portion coudée (122) du cadran (120).

6. Appareil compteur selon la revendication 1 ou 2, dans lequel la portion de ressort à lame (124) est disposée sur des lignes droites (D, E) raccordant une portion de fixation (81) qui fixe le boîtier supérieur (60) et le boîtier inférieur (80) l'un à l'autre et un centre d'un indicateur (132) se déplaçant en rotation sur la portion d'affichage (123).
